(19) Europäisches Patentamt

European Patent Office

Office européen des brevets

(11) **EP 0 989 100 A2**

(12) **EUROPÄISCHE PATENTANMELDUNG**

(43) Veröffentlichungstag:
29.03.2000 Patentblatt 2000/13

(51) Int. Cl.[7]: **C03B 9/36**, C03B 9/38

(21) Anmeldenummer: **99116584.6**

(22) Anmeldetag: **25.08.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **24.09.1998 DE 19843807**

(71) Anmelder:
**Tettauer Glashüttenwerke AG**
**61381 Friedrichsdorf (DE)**

(72) Erfinder:
• **Schnappauf, Hans**
**61381 Friedrichsdorf (DE)**
• **Schumacher, Leo Dr.Ing.**
**42579 Heiligenhaus (DE)**

(74) Vertreter:
**Zapfe, Hans, Dipl.-Ing.**
**Patentanwalt,**
**Postfach 20 01 51**
**63136 Heusenstamm (DE)**

(54) **Verfahren zum Herstellen von Glasartikeln**

(57) Beim Herstellen von Glasartikeln durch Verformen und Abkühlen in Anwesenheit von Gasen werden zur Vermeidung einer Spannungsrißkorrosion und zur Erhöhung der Festigkeit Blasgase verwendet, die einen kleinstmöglichen Wasserdampfgehalt und mindestens 50 Volumensprozent Kohlendioxid aufweisen und vorzugsweise aus technisch reinem Kohlendioxid bestehen. Die Gase können auch zur Beschleierung der Außenfläche der Vorprodukte (Tropfen aus dem Speiser) der Glasartikel oder der Glasartikel selbst verwendet werden. Die genannten Maßnahmen können auch miteinander kombiniert werden. Weiterhin kann den Gasen auch Helium zugesetzt werden.

EP 0 989 100 A2

Printed by Xerox (UK) Business Services
2.16.7/3.6

**Beschreibung**

Die Erfindung betrifft ein Verfahren zum Herstellen von Glasartikeln nach dem Oberbegriff des Patentanspruchs 1.

Theoretisch besitzt Glas eine sehr hohe Festigkeit, die jedoch durch statistisch verteilte Mikrorisse und die Ausbreitung der Mikrorisse auf der Glasoberfläche stark gemindert wird. Die Einflußgrößen für die Rißbildung und die Rißausbreitung sind das Kontaktmaterial durch Wärmeleitung beim Formgebungsprozeß und die Atmosphäre, insbesondere die Anwesenheit von OH⁻Ionen, die aus dem Wasserdampfpartialdruck in der anwesenden Gasatmosphäre stammen und zu einer Spannungsrißkorrosion führen. Bereits bei Temperaturen von etwa 800 °C, also während der Formgebung, setzt dieser Vorgang ein, d.h. der Wasserdampf spaltet an der heißen Glasoberfläche OH⁻Ionen ab.

Als Folge werden daher Glasartikel überdimensioniert, was sich bei geblasenen Hohlkörpern wie Getränkeflaschen, Röhren für Entladungslampen etc. in einer größeren Wandstärke und einem höheren Gewicht äußert. Dies verteuert nicht nur die Herstellkosten, sondern bei Getränkeflaschen auch die Folgekosten auf dem ferneren Lebensweg der Flaschen durch Transport, Reinigung bei Mehrwegflaschen etc. Auch der Endverbraucher des Flascheninhalts wird durch ein höheres Flaschengewicht belastet.

Durch die US 5 073 182 ist es bekannt, Hohlgläser, insbesondere Flaschen, nach dem letzten Formvorgang mit Flüssiggasen zu besprühen, um zu Transportzwecken während der Produktion den Erstarrungsvorgang vom plastischen zum festen Zustand zu beschleunigen. Dabei kann das Anblasen der Außenfläche durch eine Ringdüse und das Anblasen der Innenfläche durch einen stabförmigen Düsenkörper, jeweils mit Durchbrechungen, mit Temperaturen unterhalb der Raumtemperatur erfolgen. Bevorzugt sollen dabei der (durch Greifer hochbelastete) Halsbereich und der (durch die Aufstellung auf einer Transportpalette hochbelastete) Bodenbereich, die sich im übrigen an Atmosphäre befinden, beschleunigt abgekühlt werden. Als Abschreckgase werden u.a. flüssiger Stickstoff und flüssiges Kohlendioxid angegeben. Dabei kann das aus Düsen austretende Flüssiggas den Glaskörper mindestens teilweise in Tröpfchenform, oder bei Kohlendioxid in fester Form als Kohlensäureschnee erreichen. über eine Trocknung des Anblasmediums ist nichts ausgesagt, wobei es sogar wahrscheinlich ist, daß durch die Düsen feuchte und ungetrocknete Umgebungsluft angesaugt wird und im Gemisch mit den Abschreckgasen die Glasoberfläche erreicht. Weder ist eine chemische Wechselwirkung der Abschreckgase mit dem Glas, noch eine permanente Festigkeitssteigerung des fertigen Glasartikels über die übliche Festigkeit hinaus beschrieben. Vielmehr heißt es ausdrücklich, daß handelsübliche Flüssiggase verwendet werden können, die keine chemische Wechselwirkung mit dem Glas haben und außer einem thermischen Einfluß auch keine physikalische Wechselwirkung mit dem Glas haben sollen, falls kein physikalische Einfluß gewünscht wird. Ein solcher ist aber nicht beschrieben.

Auch die DE 197 06 014 befaßt sich nur mit dem Problem, die Abkühlgeschwindigkeit bereits geblasener Hohlglaskörper zur Erhöhung der Viskosität der Hohlglaskörper-Schmelzen während des Produktionsprozesses zu steigern, und zwar durch Gase, die im Bereich einer Wellenlänge von 2000 bis 5000 nm eine hohe Strahlungsabsorption besitzen. Darunter befinden sich neben Methan, Propan und Kohlenmonoxid auch Kohlendioxid und Wasserdampf, wobei die ersten drei Gase brennbar, explosiv und Kohlenmonoxid auch giftig sind, und wobei der Wasserdampf, der als ideal bezeichnet wird, aus den bereits genannten Gründen für die Lösung der Erfindungsaufgabe äußerst kontraproduktiv ist. Weder ist eine chemische Wechselwirkung der Abschreckgase mit dem Glas, noch eine permanente Festigkeitssteigerung des fertigen Glasartikels über die übliche Festigkeit hinaus, noch eine Trocknung des Abkühlgases beschrieben. Vielmehr heißt es ausdrücklich, daß die sonstigen Prozeßbedingungen unverändert bleiben sollen. Es ist auch als vorteilhaft angegeben, die benötigten großen Mengen des gasförmigen Mediums in einem geschlossenen Kreislauf zu führen, was bei Blasgas außerordentlich kompliziert, wenn nicht gar unmöglich wäre, weil das Blasgas beim Blasen unter einem erhöhten Druck von etwa 3 bar steht und beim Öffnern der Blasform größtenteils (zu etwa 2/3) sofort an die Umgebung entweicht, was bei brennbaren bzw. explosiven und/oder giftigen Gasen eine große Belastung und Gefährdung für die Umgebung darstellt. Der Rest des Blasgases wird von den Hohlgläsern über erhebliche Wegstrecken mitgeschleppt. Ein Wiederauffangen ist technisch nicht realisierbar.

Durch den Derwent-Abstract zur SU 429577 A ist es gleichfalls nur bekannt, die Abkühlgeschwindigkeit von Glas dadurch zu erhöhen, daß man Partikel, die bei der Glastemperatur sublimieren, darunter Kohlendioxid in Form von Kohlensäureschnee mit einer Flockengröße von 0,4 bis 12,7 mm gegen die Glasoberfläche bläst. Die Festigkeitssteigerung wird auf die Absorption von Wärme durch die Sublimation des Kohlendioxids zurückgeführt. Weder ist eine chemische Wechselwirkung der Abschreckgase mit dem Glas, noch eine permanente Festigkeitssteigerung des fertigen Glasartikels über die übliche Festigkeit hinaus, noch eine Trocknung des Abkühlgases beschrieben.

Durch die FR 2 650 997 A1 ist es bekannt, Flachglas von beiden Seiten mit flüssigem Stickstoff nur solange zu besprühen, bis die Temperatur von einem Wert oberhalb der übergangstemperatur (ausgehend von beispielsweise 750 °C) auf einen Wert möglichst knapp unterhalb dieser Temperatur abgesunken ist, um an teurem Stickstoff zu sparen, und anschließend die Abkühlung auf Raumtemperatur mittels normaler Luft durchzuführen. Weder ist eine chemische Wechselwirkung der Abschreckgase mit dem Glas, noch eine permanente Festigkeitssteigerung des fertigen Glasartikels über die übliche Festigkeit hinaus, noch eine Trocknung des Abkühlgases beschrieben.

Keine dieser Druckschriften offenbart also Maßnahmen oder Mittel zur Lösung der nachstehenden Erfindungsaufgabe.

Der Erfindung liegt daher die Aufgabe zugrunde, ein Verfahren der eingangs genannten Gattung anzugeben, durch das die Gebrauchsfestigkeit von Glasartikeln schon bei der Herstellung gegenüber der erzielbaren Gebrauchsfestigkeit bei den bisher angewandten Blasgasen erhöht wird.

Die Lösung der gestellten Aufgabe erfolgt bei dem Verfahren nach dem Oberbegriff des Patentanspruchs 1 erfindungsgemäß durch die Merkmale im Kennzeichen des Patentanspruchs 1.

Im Ergebnis geht es zunächst darum, den Wasserdampfgehalt der ,mit den Glartikeln in Berührung kommenden Gase kleinstmöglich zu machen. Man kann die vorteilhafte Wirkung auch so formulieren, daß die "natürliche Festigkeit" von Glas durch den Hochtemperatur-Verabeitungsprozeß zumindest weitgehend erhalten bleibt und nicht vermindert wird. Zur Erklärung dieses Phänomens sei darauf verwiesen, daß die übliche Ausblasluft, die mit einem Druck von ca. 3 bar eingesetzt wird, nur soweit getrocknet wird, daß deren Taupunkt zwischen etwa 0 und +10 °C liegt.

Der Ausdruck "kleinstmöglicher Wasserdampfgehalt" ist so zu verstehen daß die Gase in technisch vernünftigem Rahmen für eine Massenproduktion von Glasartikeln geignet sind, wobei die Trocknung durch an sich bekannte Maßnahmen wie Kondensation und/oder Adsorption erfolgen kann.

Beispielhaft sei aufgeführt, daß die absolute Restfeuchte von Luft bei einem Taupunkt von - 40 °C = 0,12 Gramm pro Normalkubikmeter beträgt, bei einem Taupunkt von - 80 °C = 0,002 Gramm pro Normalkubikmeter. Meßverfahren für die Bestimmung des Taupunktes sind im übrigen bekannt.

Der Ausdruck, daß der Taupunkt bei höchstens minus 40 °C, vorzugsweise bei höchsten minus 60 °C, liegt, besagt, daß dieser Taupunkt zwischen dem absoluten Nullpunkt und den genannten Minuswerten liegen soll und nicht darüber.

Das erfindungsgemäße Verfahren läßt sich derart weiter ausgestalten, daß die Gase auch zur Beschleierung der Außenfläche der Glasartikel und/oder ihrer Vorpodukte (z.B. Glastropfen aus einem Speiser), z.B. in einem Tunnel oder in einer gasbeschleierten Rinne ("Scoop") verwendet werden.

Mit der Erfindung sind die Vorteile verbunden, daß die Festigkeit von Glasartikeln gegenüber den Verfahren mit Anwesenheit von herkömmlichen Gasatmosphären schon bei der Herstellung erhöht und die "natürliche Festigkeit" des Glases durch den notwendigen Verabeitungsprozeß und die Anwesenheit von OH⁻Ionen und die dadurch bedingte Spannungsrißkorrosion nicht vermindert wird.

Die vorteilhafte Wirkung des Kohlendioxids wird noch dadurch unterstützt, daß es im Blasgas innerhalb der hohlen Glaskörper unter einem überdruck von beispielsweise 3 bar steht, so daß auf der inneren Oberfläche dieser Glaskörper eine größere Gasdichte zur Verfügung steht. Dadurch erfolgt eine Einwirkung des Kohlendioxids während der mehrfachen Vergrößerung der sehr heißen inneren Oberfläche der Hohlkörper, wobei ständig neue Oberflächenelemente gebildet werden, die sofort mit der Reaktionskomponente Kohlendioxid in Wechselwirkung treten können. Dies führt zu einer Erhöhung des Berstdrucks, und durch den Kontakt sowohl der Innen- als auch der Außenflächen der Hohlkörper unterstützen sich die Effekte synergistisch.

Glasartikel müssen daher nicht mehr so stark überdimensioniert werden, was sich bei geblasenen Hohlkörpern wie Getränkeflaschen und Röhren für Gasentladungslampen in einer geringeren Wandstärke und einem geringeren Gewicht äußert. Dies verbilligt nicht nur die Herstellkosten, sondern bei Getränkeflaschen auch die Folgekosten auf dem ferneren Lebensweg der Flaschen durch Transport, Reinigung bei Mehrwegflaschen etc. Auch der Endverbraucher des Flascheninhalts wird durch ein geringeres Flaschengewicht entlastet. Dennoch sinkt ganz allgemein die Bruchgefahr durch den Abbau von Spannungsspitzen, die meist die Ausgangspunkte von Glasbruch sind.

Es kann angenommen werden, daß die überraschende Festigkeitssteigerung auf der weitgehenden Vermeidung von OH⁻Ionen und der dadurch bedingten stark reduzierten Spannungsrißkorrosion beruht. Bei Verwendung von überwiegend Kohlendioxid beruht die Reduzierung der Spannungsrißkorrosion auf dem Einbau von atomarem Sauerstoff in das Netzwerk des Glases im Sinne einer "Reparatur" zerstörter Sauerstoff-Brücken-Bindungen.

Es kann weiterhin angenommen werden, daß dabei die Dissoziation von Kohlendioxid im Temperaturbereich um 700 °C eine gewisse Rolle spielt, durch die teilweise, wenn auch nur in geringer Menge, atomarer Sauerstoff entsteht, was sich anhand von thermodynamischen Rechnungen belegen läßt:

$$CO_2 \leftrightarrow CO + \tfrac{1}{2} O_2$$

Molekularer Sauerstoff dissoziiert nennenswert erst bei Temperaturen über 1500 °C. Dies erklärt die entscheidende Verbesserung gegenüber der Verwendung von getrockneter Umgebungsluft, die ja auch Sauerstoff enthält.

Es kann schließlich angenommen werden, daß die heißen Glasoberflächen, inbesondere eingelagerte Kohlenstoffpartikel katalytische Wirkungen auf die Dissoziation ausüben.

Dabei ist es besonders vorteilhaft, wenn - entweder einzeln oder in Kombination - :

\* das Blasgas mindestens 80 Volumensprozent Kohlendioxid enthält,

* dem Blasgas 1 bis 10 Volumensprozent Helium, vorzugsweise 2 bis 9 Volumensprozent Helium, insbesondere vorzugsweise 3 bis 5 Volumensprozent Helium zugesetzt werden,

* als Blasgas technisch reines Kohlendioxid verwendet wird,

* die weiteren Blasgase vor ihrem Einsatz getrocknet werden,

* die Blasgase vor ihrem Einsatz soweit getrocknet werden, daß ihr Taupunkt bei höchstens minus 60 °C liegt,

* die Blasgase zusätzlich zur Beschleierung der Außenfläche der der Glasartikel verwendet werden, insbesondere, wenn die Gase zur Beschleierung der Außenfläche der Glasartikel in einer Vorrichtung aus der Gruppe Tunnel und Rinne ("Scoop") verwendet werden.

Die Zugabe von Helium hat den weiteren Vorteil, daß Helium eine sehr hohe Wärmeleitfähigkeit aufweist, was den Abkühlprozeß beschleunigt. Hinsichtlich der Festigkeitssteigerung kann angenommen werden, daß die Heliumatome wegen ihrer geringen Größe in die Glasmatrix diffundieren, dort Lücken ausfüllen und damit eine weitere Festigkeitssteigerung zur Folge haben.

Beispiele mit Kohlendioxid und Vergleichsbeispiele:

1. Es wurden jeweils 300 braune Bierflaschen des Typs Standard IV vergleichsweise mit Gasen bzw. Gasgemischen im Enghals-Preßblas-Verfahren ausgeblasen, die durch eine Drei-Gas-Mischanlage aus folgenden Gasvorlagen erzeugt wurden:

1. normale getrocknete Kompressorluft,
2. Stickstoff (gasförmig)
3. Kohlendioxid (gasförmig).

Die Trockung wurde so eingestellt, daß sich im Mittel bei 8 bar ein Drucktaupunkt von -41 °C ergab. Normale Kompressor-Luft kann - in Abhängigkeit von der Luftfeuchtigkeit - einen Taupunkt bis zu etwa +40°C haben; üblicherweise wird mit mit einem Taupunkt von +10 °C gearbeitet.
Es wurden folgende Gase bzw. Gasmischungen verwendet:

| Versuchsreihe | Blasluftmedium | Anteile [%] |
|---------------|----------------|-------------|
| 1 | Kompressorluft | 100 |
| 2 | Standardgemisch *) | 100 |
| 3 | Luft + $CO_2$ + $N_2$ | 50 : 25 : 25 |
| 4 | Kohlendioxid | 100 |

(*) = getrocknete Luft + $N_2$-Kaltgas)

Es fanden Festigkeitsprüfungen des Berstdrucks nach DIN 52320 und der Pendelschagfestigkeit nach DIN 52295 statt.
In allen Fällen zeigte sich trotz der üblichen Streuung der Meßwerte jedenfalls im Mittel in der Versuchsreihe 4 eine deutliche Steigerung des Berstdrucks und der Pendelschlagfestigkeit gegenüber den Versuchsreihen 1 bis 3. Der Berstdruck stieg um 7 %, die Pendelschlagfestigkeit stieg gegenüber dem Standardgemisch (Versuchsreihe 2) um 21 %, gegenüber der Kompressorluft (Versuchsreihe 1) sogar um 26 %. Die Versuchsreihe 1 (mit Kompressorluft) zeigte, daß die Pendelschlag-Versuchsergebnisse noch um ca. 4 % unter denen der Versuchsreihe 2 (Standardgemisch) lagen; die Pendelschlag-Versuchsergebnisse der Versuchsreihe 3 (mit 25 % Kohlendioxid) lagen immerhin schon um um ca. 4 % über denen der Versuchsreihe 2 (Standardgemisch). Dies zeigt den richtigen Weg zu einer deutlichen Erhöhung des Kohlendioxid-Anteils.

Erste Zusatzversuche mit einer zusätzlichen Beschleierung der Außenfläche der Glasartikel mit Kohlendioxid in einem der Blasmaschine nachgeschaltetet Tunnel zeigten eine Steigerung der Pendelschlagfestigkeit um bis zu 40 %. Durch die zusätzliche Beschleierung der Außenfläche der Glasartikel mit Kohlendioxid wird zusätzlich auch die Innendruckfestigkeit, d.h. der sog. Berstdruck erhöht.

2. In einem widerstandsbeheizten Schmelzofen wurden 1000 g Braunglas typischer Zusammensetzung für Bierflaschen bei 1500 °C geschmolzen und in eine auf 300 °C vorgeheizte Messingform gegossen und anschließend zwei Stunden lang bei 580 °C an normaler Atmosphäre entspannt.

Aus dem entspannten Glasblock wurden Stäbchen mit rechteckigem Querschnitt von 3 mm x 4 mm und 50 mm Länge gesägt, wobei die Seiten, an der beim späteren Biegebruchversuch Zugspannungen entstanden, geschliffen wurden. Die Proben waren planparallel mit einer maximalen Abweichung von 0,02 mm.

Anschließend wurden je 20 Proben mit 5 K/min auf 650 °C erwärmt, eine Stunde gehalten und auf Raumtemperatur abgekühlt. Eine erste Charge der Proben wurde bei Erwärmung und Abkühlung mit trockenem Kohlendioxidgas und eine zweite Charge mit Umgebungsluft behandelt.

Die Biegebruchfestigkeit der unterschiedlich behandelten Glasproben wurde nach dem 4-Punkte-Verfahren bestimmt. Er wurden folgende Mittelwerte ermittelt.

| | |
|---|---|
| Proben an Luft: | 110 MPa |
| Proben unter Kohlendioxid: | 139 MPa |

Mit anderen Worten, es fanden erhebliche Festigkeitssteigerungen gegenüber einer reinen Luftbehandlung statt.

## Patentansprüche

1. Verfahren zum Herstellen von hohlen geblasenen Glasartikeln durch Abkühlen unter Behandlung mit Kohlendioxid oder einem Kohlendioxid enthaltenden Gas, **dadurch gekennzeichnet,** daß zur Erhöhung der Gebrauchsfestigkeit der Blasvorgang mit einem Blasgas durchgeführt wird, das mindestens 50 Volumensprozent gasförmiges Kohlendioxid enthält, und daß bei Zusatz mindestens eines weiteren Blasgases zum Kohlendioxid der Taupunkt des weiteren Blasgases bezüglich Wasserdampf bei höchstens minus 40 °C liegt.

2. Verfahren nach Anspruch 1, **dadurch gekennzeichnet**, daß das Blasgas mindestens 80 Volumensprozent Kohlendioxid enthält.

3. Verfahren nach Anspruch 1, **dadurch gekennzeichnet**, daß dem Blasgas 1 bis 10 Volumensprozent Helium zugesetzt werden.

4. Verfahren nach Anspruch 3, **dadurch gekennzeichnet**, daß dem Blasgas 2 bis 9 Volumensprozent Helium zugesetzt werden.

5. Verfahren nach Anspruch 3, **dadurch gekennzeichnet**, daß dem Blasgas 3 bis 5 Volumensprozent Helium zugesetzt werden.

6. Verfahren nach Anspruch 1, **dadurch gekennzeichnet**, daß als Blasgas technisch reines Kohlendioxid verwendet wird.

7. Verfahren nach einem der Ansprüche 1 bis 6, **dadurch gekennzeichnet**, daß die weiteren Blasgase vor ihrem Einsatz getrocknet werden.

8. Verfahren nach einem der Ansprüche 1 bis 7, **dadurch gekennzeichnet**, daß die Blasgase vor ihrem Einsatz soweit getrocknet werden, daß ihr Taupunkt bei höchstens minus 60 °C liegt.

9. Verfahren nach einem der Ansprüche 1 bis 8, **dadurch gekennzeichnet**, daß die Blasgase zusätzlich zur Beschleierung der Außenfläche der geblasenen Glasartikel verwendet werden.

10. Verfahren nach Anspruch 9, **dadurch gekennzeichnet**, daß die Gase zur Beschleierung der Außenfläche der Vorprodukte der Glasartikel in einer Vorrichtung aus der Gruppe Tunnel und Rinne ("Scoop") verwendet werden.